# EUROPÄISCHE PATENTSCHRIFT

(11) **EP 0 582 167 B1**
(45) Veröffentlichungstag und Bekanntmachung des Hinweises auf die Patenterteilung: **23.08.1995**
(21) Anmeldenummer: 93111917.6
(22) Anmeldetag: 26.07.1993
(51) Int. Cl.: C09K 21/12, C09K 21/04

(54) **Verbesserte Intumeszenzträger und deren Verwendung**
Improved intumescent carriers and their use
Porteurs intumescents améliorés et leur utilisation

(30) Priorität: 06.08.1992 DE 19924226044
(43) Veröffentlichungstag der Anmeldung: 09.02.1994
(73) Patentinhaber: BAYER AG, D-51368 Leverkusen (DE)
(72) Erfinder: von Bonin, Wulf, Dr., D-51519 Odenthal (DE)

(56) Entgegenhaltungen:
- EP-0 527 401
- US-5 156 775
- EP-0 468 259
- US-4 182 681
- EP-0 389 768
- US-4 288 491
- DATABASE WPI Section Ch, Week 9209, Derwent Publications Ltd., London, GB; Class A28, AN 92-069928 & JP-A-4 015 218 (YOKOHAMA RUBBER KK) 20. Januar 1992

## Beschreibung

Die vorliegende Erfindung betrifft verbesserte, in wäßrigen Systemen oder in fester Form applizierbare Intumeszenzträger auf der Basis von Aluminium-Phosphat-Aminsalzen.

Intumeszenzträger auf Basis von Aluminium-Phosphat-Salzen sind bereits bekannt und z.B. in der DE-OS 4 023 310 beschrieben. Solche Intumeszenzträger haben zum Teil ausgezeichnete Intumeszenzwirkungen, es ist aber in vielen Fällen von Vorteil, Intumeszenzträger mit noch weiter gesteigerter Intumeszenzwirkung zur Verfügung zu haben, z.B. wenn es darum geht, weitgehend anorganische Leichtwerkstoffe herzustellen, indem man die Intumeszenzträger in Schaumstofformteile überführt.

Unter Intumeszenz versteht man die Fähigkeit eines Materials bei Beflammung oder beim Erhitzen auf hohe Temperaturen auf zuschäumen, d.h. zu intumeszieren.

Es wurden nun Intumeszenzträger auf der Basis von Aluminium-Phosphat-Salzen gefunden, die dadurch gekennzeichnet sind, daß es sich um Umsetzungsprodukte handelt aus
1 Mol einer Aluminiumverbindung mit
2 bis 5 Molen einer Phosphor enthaltenden Säure,
2 bis 9 Molen einer Bor enthaltenden Säure und
2 bis 9 Molen eines Alkanolamins,
die gegebenenfalls bis zu 36 Mol Wasser pro Mol eingesetzter Aluminiumverbindung enthalten.

Als Aluminiumverbindungen kommen z.B. solche in Betracht, die durch Umsetzung mit einer Phosphorsäure Aluminiumphosphate ergeben können, z.B. Aluminiumoxide, -oxidhydrate, -hydroxide und -carbonate. Bevorzugt ist Aluminiumhydroxid Al(OH)₃, gegebenenfalls Kristallwasser enthaltend.

Als Phosphor enthaltende Säuren kommen z.B. Ortho-, Meta-, Pyro- und Polyphosphorsäuren, sowie Phosphon- und Phosphinsäuren in Betracht. Bevorzugt ist Orthophosphorsäure H₃PO₄. Bezogen auf 1 Atom-Äquivalent Aluminium in der Aluminiumverbindung werden bevorzugt 2,5 bis 3,5, besonders bevorzugt 2,9 bis 3,1 Mol Phosphor enthaltender Säure eingesetzt.

Als Bor enthaltende Säuren kommen z.B. Orthoborsäure und sonstige Borsäuren oder Borverbindungen in Betracht, die unter dem Einfluß von Wasser in Orthoborsäure übergehen können, z.B. Boroxide. Bevorzugt ist Orthoborsäure H₃BO₃. Bezogen auf 1 Atom-Äquivalent Aluminium in der Aluminiumverbindung werden bevorzugt 3 bis 7, insbesondere 4 bis 6 Mole Bor enthaltende Säure oder ein Vorläufer davon eingesetzt.

Als Alkanolamine kommen z.B. Umsetzungsprodukte von Ammoniak oder Aminen mit Alkylenoxiden in Betracht Neben Ammoniak seien als Amine beispielsweise genannt Hydrazin, Hydroxylamin, gegebenenfalls cyclische aliphatische, aromatische und heterocyclische Amine und Polyamine mit bis zu 7 N-Atomen und bis zu 20 C-Atomen wie Ethylendiamin, Propylendiamin, Piperazin und Morpholin. Als Alkylenoxide seien beispielsweise genannt Ethylenoxid, Propylenoxid und deren Gemische. Auch Polyethergruppen enthaltende Alkanolamine und Polyalkanolamine (wie Diethanolamin, Triethanolamin und z.B. 1- bis 4-fach alkoxylierte Diamine, wie Diethanolethylendiamin) kommen in Frage. Bevorzugt ist Monoethanolamin. Bezogen auf 1 Atom-Äquivalent Aluminium in der Aluminiumverbindung werden bevorzugt 3 bis 7 Mole Alkanolamin eingesetzt. Besonders bevorzugt werden die Bor enthaltende Säure und das Alkanolamin in gleicher molarer Menge eingesetzt.

Der Wassergehalt erfindungsgemäßer Intumeszenzträger kann in weiten Grenzen schwanken (0 bis 36 Mol pro Mol eingesetzter Aluminiumverbindung), wobei nicht unterschieden wird zwischen Lösungswasser, Kristallwasser und durch Kondensationsreaktionen frei gewordenes Wasser. Der Wassergehalt wird im wesentlichen von den bei der Herstellung und Trocknung angewendeten Temperaturen beeinflußt.

Die Herstellung erfindungsgemäßer Intumeszenzträger kann durch Mischung der Komponenten in Gegenwart von vorzugsweise möglichst wenig Wasser erfolgen, z.B. durch Verkneten bei 50 bis 120°C, wobei es zweckmäßig ist, möglichst feinteilige Aluminiumverbindungen einzusetzen.

Oft ist es technisch vorteilhaft, direkt eine z.B. 50 bis 80 gew.-%ige wäßrige Lösung der erfindungsgemäßen Intumeszenzträger herzustellen, indem man z.B. die Komponenten in einer entsprechenden Menge Wasser in einem Rührgefäß bei 25 bis 110°C zur Umsetzung bringt.

Es hat sich als vorteilhaft erwiesen, zunächst durch Umsetzung der Aluminiumverbindung mit der Phosphor enthaltenden Säure in Wasser eine z.B. 65 bis 75 gew.-%ige Aluminiumphosphatlösung herzustellen, dann diese mit Alkanolamin und schließlich mit der Bor enthaltenden Säure zu versetzen oder das Aluminiumphosphat in 65 bis 75 gew.-%iger Lösung mit einer 50 bis 75 gew.-%igen Lösung eines Umsetzungsproduktes einer Bor enthaltenden Säure und eines Alkanolamins zur Umsetzung zu bringen. Diese Umsetzung ist exotherm. Die so hergestellten Intumeszenzträger können in wäßrigem Medium als klare Lösung oder als Dispersion vorliegen. Soweit hier Losungen angesprochen sind, ist das Losungsmittel im allgemeinen Wasser.

Die Intumeszenzfähigkeit der erfindungsgemäßen Intumeszenzträger ist abhängig vom Molverhältnis Aluminiumverbindung + Phosphor enthaltender Säure einerseits zu Bor enthaltender Säure + Alkanolamin andererseits. Aus der Aluminiumverbindung und der Phosphor enthaltenden Säure bildet sich formal ein saures Aluminiumphosphat (z.B. Al(H₂PO₄)₃), aus der Bor enthaltenden Säure und Alkanolamin formal ein BorsäureAlkanolamin-Komplex (z.B. H₃BO₃ x H₂N-CH₂-CH₂-OH). Beispielsweise ist bei einem molaren Verhältnis von Al(H₂PO₄)₃ zu (H₃BO₃ x H₂N-CH₂-CH₂-OH) oder entsprechenden anderen Aluminiumphosphaten zu Borsäure-Alkanolaminkomplexen von 1:1 die Intumeszenz geringer als wenn dieses Molverhältnis, wie es besonders bevorzugt ist, bei 1:3,5 bis 1:6 liegt. Nimmt dieses Molverhältnis weiter ab, z.B. unter 1:7,5, so sinkt die Intumeszenz wieder ab.

Das bedeutet, daß man bei gegebenen Ausgangsmaterialien die Intumeszenzeigenschaften durch die entsprechende Wahl der Mengen an Ausgangsmaterialien weitgehend beliebig steuern kann. Die Intumeszenzeigenschaften sind bei Pulvern auch von der Korngröße abhängig. Pulver mit Korngrößen im Bereich 0,5 bis 2 mm schäumen im allgemeinen etwas mehr auf (bei sonst gleichen Bedingungen) als Pulver geringerer Korngrößen.

Im Rahmen der vorliegenden Erfindung kann gegebenenfalls ein Teil der zum Einsatz gelangenden Alkanolamine durch Ammoniak, Ethylendiamin oder andere flüchtige Amine ersetzt werden, wobei jedoch vorzugsweise nicht mehr als 50 Mol-% der Alkanolamine substituiert werden. Durch den Einsatz von Ammoniak wird der organische Anteil im Intumeszenzträger weiter vermindert.

Weitere bevorzugte erfindungsgemäße Intumeszenzträger sind
- Umsetzungsprodukte von einem Mol Aluminiumhydroxid mit 3 Molen Orthophosphorsäure, 3 bis 7 Molen Monoethanolamin und 3 bis 7 Molen Orthoborsäure,
- solche Umsetzungsprodukte im Gemisch mit 20 bis 70 Gew.-% Wasser (bezogen auf die Mischung) und
- solche Umsetzungsprodukte, die bei bis zu 150°C, vorzugsweise zwischen 10 und 120°C getrocknet wurden (bei Normaldruck).

Erfindungsgemäße Intumeszenzträger sind von Bedeutung bei der Herstellung von Leichtwerkstoffen und Schaumstoffen, sowie im Bereich des vorbeugenden Brandschutzes. Sie können z.B. als Kitte, Beschichtungen, Formteile, Gele, Füllungen und massive oder poröse Formkörper eingesetzt werden. Sie können so z.B. den Schutz von flächigen Bauelementen, Behältern, Kabeln, Kabeldurchführungen, Rohren, Rohrdurchführungen, Fugen, Hohlräumen, Stütz- oder Abschlußkonstruktionen aus z.B. Metall, Holz oder Kunststoff gegen den Durchtritt von Flammen, Hitze und Brandgasen bewirken.

Durch Erhitzung der erfindungsgemäßen Intumeszenzträger werden weitgehend anorganische Intumeszenzschäume erhalten, die in vielen Fällen bis zu Temperaturen über 1200°C stabil sind, der oxidativen Abtragung nicht unterliegen, vielfach feinporig sind und hervorragende thermische Isolierstoffe ergeben, wobei das Aufschäumen mit der Erzeugung nur geringer Mengen von Rauchgasen verbunden ist.

Erfindungsgemäße Intumeszenztrager, auch in Form ihrer Zubereitungen in wäßrigen oder sonstigen Verteilungsmedien (hierunter sind auch Kunststoffmatrices, Polymere und Polymerdispersionen zu verstehen) sind ausgezeichnete Bindemittel mit intumeszentem und Brandschutzcharakter. Sie eignen sich z.B. auch als Bindemittel für ihrerseits intumeszente oder nicht intumeszente, massive oder poröse, vorzugsweise feinteilige Substrate. Beispiele für solche Substrate sind Graphite, insbesondere blähfähige Graphite, Vermikulite, Perlite, Zeolithe, Montmorillonite, Tone, Kaoline, Quarzmehl, Gesteinsmehl, Fasern (z.B. aus Metallen, Carbiden, Oxiden, Silikaten, Alumosilikaten, Kohlenstoff, Glas, Basalt und sonstigen, für die Herstellung von Fasern geeigneten Gesteinen), weitgehend organische, vorzugsweise feinteilige Substrate wie Natur- oder Synthesefasern, Holz, Holzspäne, Sägemehl, Stroh, Früchte, blähfähige Früchte, Rinden, Fruchtkerne, Kunststoffe der verschiedensten Art, sowie Pulver beispielsweise aus Glas oder Metall. Derartige zu bindende Substrate können in massiver, poröser, blähfähiger oder bereits aufgeblähter oder verschäumter Form zum Einsatz gelangen.

Erfindungsgemäße Intumeszenzträger können auch als thermoplastische Werkstoffe mit Verarbeitungstemperaturen beispielsweise zwischen 80 und 600°C, vorzugsweise 100 und 200°C, insbesondere 110 und 170°C Anwendung finden. Sie können dabei nach den Methoden der thermoplastischen Kunststoffverarbeitung verformt werden und mehr oder weniger glasartig-transparente oder mehr oder weniger aufgeschäumte Formteile ergeben. Man kann aus erfindungsgemäßen, z.B. als Pulver vorliegenden Intumeszenzträgern auch mehr oder weniger stark aufgeschäumte Vorexpandate, z.B. Vorformlinge herstellen, die gegebenenfalls in einem weiteren Arbeitsgang durch Erhitzen, z.B. in Formen, einer weiteren Expansion unterworfen werden können und so Leichtformteile oder leichte aufgeblähte Pulver ergeben. Für die Vorexpansion können z.B. Temperaturen im Bereich 100 bis 500°C, vorzugsweise 150 bis 300°C, angewendet werden.

Ferner kann man erfindungsgemäße Intumeszenzträger auf massive, poröse, geschäumte und/oder blähfähige Substrate aufbringen, z.B. aus wäßriger Lösung, oder solchen Substraten pulvrig zumischen und die solcherart modifizierten Substrate einem thermisch initiierten Expansionsprozeß, gegebenenfalls in Formen, unterziehen. Für solche Kombinationen aus erfindungsgemäßen Intumeszenzträgern und Substraten kommen insbesondere blähfähige Substrate in Frage, die in massiver, partiell geblähter oder vollständig geblähter Form oder in Form von Mischungen dieser Formen eingesetzt werden können. Beispiele für solche Substrate sind Vermikulite, blähfähige Tone, Perlite und insbesondere blähfähige Graphite und Graphitverbindungen, z.B. OH-, SOₓ-und/oder NOₓ-Gruppen enthaltende Graphite (sogenannte Blähgraphite) in massiver, teilweise expandierter oder vollständig expandierter Form. Es kommen auch blähfähige organische Materialien als Substrate und diese enthaltende Mischungen in Betracht, wie etwa Kork, blähfähige Früchte (z.B. Mais, Weizen oder Reis) oder blähfähige Stärkeformulierungen, blähfähige Kunststoffe (z.B. Carbonyl- und Amidgruppen enthaltende Polymere) und blähfähige Kunststoffformulierungen (z.B. blähfähige Styrolpolymerisate).

Die erfindungsgemäßen Intumeszenzträger können auch, z.B. als intumeszierende Füllstoffe oder Brandschutzadditive Kunststoffdispersionen, Anstrichmitteln, Kautschuken, Kunststoffen und Kunststoffpulvern vor, während oder nach der Herstellung hinzugefügt werden. Dabei sollten Temperaturen von etwa 200°C nicht überschritten werden. Ebenso können erfindungsgemäße Intumeszenzträger Mehrkomponenten-Kunstharzen, Ein- oder Mehrkomponenten-Kunststoffen (z.B. Thermoplasten, Elastomeren, Duroplasten, Polyesterharzen, Polyepoxidharzen, Polyurethanen, Polysulfidharzen oder Formaldehydharzen) vor oder während der Verarbeitung hinzugefügt werden, in der Regel als Pulver.

Vorzugsweise in Form ihrer wäßrigen Lösungen, die gegebenenfalls polymere Bindemittel, z.B. Polyacrylamide, Polyvinylalkohole oder Polymerlatices enthalten können, können erfindungsgemäße Intumeszenzträger auch als Beschichtungsmittel oder Komponente zur Herstellung von intumeszenzfähigen Anstrichstoffen verwendet werden. Derartige Anstrichstoffe können weiterhin z.B. Farbstoffe, Pigmente, Füllstoffe und/oder sonstige Hilfsmittel enthalten und z.B. zum Brandschutz bei Holz, Textilien, Pappe, Papier, Dämmstoffplatten und Schaumstoffen eingesetzt werden.

Sowohl in fester Form, als auch in Form von Lösungen können erfindungsgemäße Intumeszenzträger auch bei der Herstellung von Bremsbelägen, Schaumstoffen (z.B. auf Polyurethanbasis), Brandschutzvorhängen und/oder Brandschutztextilien, z.B. auf der Basis von organischen oder mineralischen Fasern oder expandierten Graphiten, verwendet werden.

Desgleichen eignen sich erfindungsgemäße Intumeszenzträger als Bestandteil von intumeszenzfähigen Kitten, Mörteln und Spachtelmassen, die auch bei sehr hohen Temperaturen Stehvermögen aufweisen sollen.

Ebenfalls sind erfindungsgemäße Intumeszenzträger, insbesondere in Form ihrer wäßrigen Lösungen, die gegebenenfalls noch gelbildende Zusatzstoffe enthalten können (etwa hochmolekulare und/oder vernetzte Polyacrylamide, Poly(Meth)-Acrylsäuren und/oder Polyvinylalkohol), als Löschflüssigkeiten geeignet.

Wenn man erfindungsgemäße Intumeszenzträger in gelöster oder pulveriger Form in einen heißen Gasstrom einträgt, so erhält man z.B. bei Temperaturen zwischen 150 und 1000°C, vorzugsweise 250 und 750°C, zu Hohlkörperchen aufgeblähte Materialteilchen, die Schüttgewichte z.B. zwischen 10 und 100 kg/m³ aufweisen. Sie sind z.B. als Isolierschüttung, Leichtfüllstoff (z.B. für Gießharze) oder Wirkstoffträger (z.B. für Biowirkstoffe im Pflanzenschutz) geeignet. Sie sind auch, gegebenenfalls nach Verdichtung und/oder Zusatz von Bindemitteln in trockenem oder angefeuchtetem Zustand zu Leichtformkörpern verarbeitbar. Die Hohlkörperchen können auch als Hilfsmittel im Umweltschutzbereich verwendet werden, z.B. zu Adsorptionszwecken, in der Gasreinigung und zur Bindung von Farbstoffen, Ölen und Schlämmen.

Die wäßrigen Lösungen der erfindungsgemäßen Intumeszenzträger weisen im allgemeinen pH-Werte auf zwischen 4 und 8, insbesondere zwischen 6 und 7. Das ist überraschend, da ihre molare Zusammensetzung erhebliche Überschüsse an Säureäquivalenten über Basenäquivalenten aufweist Aufgrund des günstigen pH-Wertes sind sie mit vielen Werkstoffen gut verträglich und deshalb gut kombinierbar.

Der Gehalt erfindungsgemäßer Intumeszenzträger an den vorstehend beschriebenen Materialkombinationen für die verschiedensten Einsatzgebiete kann in weiten Grenzen, je nach Bedarf, variiert werden. Wenn neben den Intumeszenz- oder Isoliereigenschaften auch eine Wirksamkeit als Verklebungs- oder Bindemittel von Interesse ist, kann man Kombinationen wählen, bei denen der Gehalt an erfindungsgemäßen Intumeszenzträgern z.B. zwischen 0,5 und 50, vorzugsweise zwischen 15 und 35 Gew.-% liegt. Wenn mit erfindungsgemäßen Intumeszenzträgern Leichtformkörper hergestellt werden sollen, kann, je nach gewünschtem Materialcharakter, deren Einsatzmenge z.B. zwischen 2 und 100, vorzugsweise zwischen 10 und 100 Gew.-% liegen.

Ähnliche Mengenverhältnisse sind für Kombinationen mit erfindungsgemäßen Intumeszenzträgern geeignet, die für Beschichtungen eingesetzt werden sollen.

Zur Herstellung von Leichtformteilen, gegebenenfalls in Kombination mit blähfähigen Graphiten oder ähnlichen Materialien, kommen z.B. 5 bis 100 Gew.-%, vorzugsweise 10 bis 85 Gew.-% erfindungsgemäße Intumeszenzträger enthaltende Ausgangsprodukte in Frage.

Bei dem vorzugsweise in Pulverform vorgenommenen Zusatz erfindungsgemäßer Intumeszenzträger zu Reaktionsharzen, z.B. Harzen zur Herstellung von massiven, porösen oder schaumstoffartigen Produkten, z.B. UP-Harzen, Epoxidharzen, Formaldehydharzen, Isocyanuratharzen oder Polyurethanharzen, werden z.B. Zusätze von 5 bis 75 Gew.-%, vorzugsweise 25 bis 65 Gew.-% vorgenommen, wenn man gute Intumeszenz und/oder Brandschutzwirkung erzielen will.

Als Bindemittel für Preßplatten aus Holzspänen oder sonstigen, vorzugsweise faserigen oder flächigen Rohstoffen, kann man z.B. 0,5 bis 50, vorzugsweise 3 bis 30 Gew.-% erfindungsgemäße Intumeszenzträger einsetzen.

Für viele Anwendungen ist es vorteilhaft, erfindungsgemäße Intumeszenzträger als Feststoff oder wäßrige Lösung ohne weitere Zusätze oder mit geringen Mengen an Zusätzen und Hilfsmitteln, z.B. bis zu 10 Gew.-%, vorzugsweise bis zu 5 Gew.-% einzusetzen. Beispiele für solche Anwendungen sind die Beschichtung von Flächen und Zuschlagsmittel oder Ausgangsmaterial für Mischungen zur Herstellung von Leichtformkörpern, Feuerlöschpulver, Zusätze zu Feuerlöschpulvern und Zusätze zu Löschflüssigkeiten.

Bevorzugte Verwendungen erfindungsgemäßer Intumeszenzträger sind
- die Herstellung von blähfähigen und geblähten Füllstoffen,
- die Mischung mit Graphiten, insbesondere blähfähigen Graphiten, die in massiver oder partiell oder vollständig geblähter Form vorliegen können, und die Herstellung von Beschichtungen oder Leichtformkörpern daraus,
- die Mischung mit Holzspänen und/oder sonstigen organischen und/oder anorganischen spanartigen Materialien und die Herstellung von Formkörpern oder Platten daraus unter Anwendung von Druck und Wärme,
- Elastomere, Gießharze, Reaktionsharze, Preßmassen und Thermoplaste zur Herstellung von massiven, porösen oder schaumstoffartigen Formteilen, die erfindungsgemäße Intumeszenzträger enthalten,
- Brandschutzanstrichmittel, Kitte, Mörtel und Beschichtungsmittel, die erfindungsgemäße Intumeszenzträger enthalten und
- Vorrichtungen für den vorbeugenden Brandschutz bei Kabel- und Rohrschotts, Luft- und Transportkanälen, Kabeltrassen, Rohrbrücken, Steuereinrichtungen und Fugen, die erfindungsgemäße Intumeszenzträger enthalten.

Beim Auffinden der erfindungsgemäßen Intumeszenzträger war es nicht nur überraschend, daß mit relativ geringen molaren Mengen an Alkanolaminen wäßrige Lösungen von pH-Werten zwischen 6 und 7 erhältlich sind, sondern auch, daß innerhalb des Systems Aluminiumphosphat-Borsäure mit relativ geringen Mengen an Alkanolaminen klare und stabile Lösungen erhalten werden können.

Es war auch nicht zu erwarten, daß z.B. ein Komplex aus 1 Mol Aluminiumtrisphosphat und 3 Mol des Umsetzungsproduktes aus 1 Mol Borsäure und 1 Mol Ethanolamin ein wesentlich besseres Intumeszenzverhalten zeigt, als ein Umsetzungsprodukt aus 1 Mol Aluminiumtrisphosphat mit 3 Molen Ethanolamin.

Im folgenden wird die Erfindung beispielhaft erläutert. Die angegebenen Teile und Prozente beziehen sich auf das Gewicht, sofern nichts anderes angegeben ist.

### Beispiele

### Allgemeines:

Zur Kennzeichnung der Intumeszenzfähigkeit wurde in ein Reagenzglas mit einem Durchmesser von 12 mm 1 g des jeweiligen gepulverten Intumeszenzträgers eingebracht. Dann wurde das Reagenzglas in einen auf 400°C vorgeheizten Heizschrank gestellt und nach 30 Minuten entnommen. Dann wurde die Steighöhe des gebildeten Intumeszenzschaumes in cm gemessen und der so erhaltene Meßwert direkt als Intumeszenzwert angegeben.

### Vergleichsbeispiel

Durch Auflösen von 1 Mol Al(OH)₃ in konz. H₃PO₄ (3 Mol) bei 100°C wurde in 60 %iger wäßriger Lösung eine klare Lösung von Al(H₂PO₄)₃ hergestellt. Diese wurde mit 3 Mol Monoethanolamin umgesetzt und die erhaltene klare Lösung (pH 6,1) bei 80°C bis zur Gewichtskonstanz getrocknet. Das so erhaltene Material hatte einen Intumeszenzwert von 1,8. Der gebildete Intumeszenzschaum war grobporig und wenig homogen.

### Beispiel 1

Es wurde wie beim Vergleichsbeispiel gearbeitet. Vor dem Trocknen wurden jedoch noch 3 Mol H₃BO₃ zugesetzt und bei 80°C aufgelöst. Man erhielt eine Lösung mit einem pH-Wert von 6,8 die nunmehr bei 80°C zur Gewichtskonstanz getrocknet wurde.

Das erhaltene Material ließ sich gut pulvern und hatte einen Intumeszenzwert von 5,5. Der gebildete Intumeszenzschaum war feinporig und sehr homogen.

Dieses Beispiel verdeutlicht die erheblich verbesserten Intumeszenzeigenschaften erfindungsgemäßer Intumeszenzträger.

### Beispiel 2

Es wurde wie bei Beispiel 1 gearbeitet, jedoch wurde anstelle von 3 Mol Ethanolamin ein Gemisch aus 2 Mol Diisopropanolamin und 1 Mol Ammoniak verwendet. Der Intumeszenzwert des erhaltenen Materials betrug 3,5. Der Intumeszenzschaum war homogen und feinporig.

### Beispiel 3

Es wurde wie bei Beispiel 1 gearbeitet, anstelle von Monoethanolamin wurde jedoch 1 Mol Triethanolamin im Gemisch mit 1 Mol Diethanolamin und 1 Mol Monoethanolamin eingesetzt. Der Intumeszenzwert des erhaltenen Materials war 3,1. Der Intumeszenzschaum war relativ grobporig.

### Beispiel 4

Jeweils getrennt wurde eine 70 %ige wäßrige Lösung von Al(H₂PO₄)₃ und eine 70 %ige Lösung des Umsetzungsproduktes aus 1 Mol H₃BO₃ und 1 Mol Ethanolamin hergestellt. Dann wurden beide Lösungen bei 60°C vereinigt und solange gerührt bis sich eine klare Lösung gebildet hatte. Die Mischung der Lösungen wurde mit verschiedenen Molverhältnissen Al:B vorgenommen. Abschließend wurde jeweils bei 80°C bis zur Gewichtskonstanz getrocknet und der Intumeszenzwert bestimmt.

| | | | | | | | | |
|---|---|---|---|---|---|---|---|---|
| Molverhältnis Al:B | 1:2 | 1:2,5 | 1:3 | 1:3,5 | 1:4 | 1:4,5 | 1:5 | 1:6 |
| Intumeszenzwert | 2,0 | 3,5 | 5,5 | 6,0 | 6,1 | 6,0 | 5,3 | 5,0 |

Die gefundenen Intumeszenzwerte zeigen die Möglichkeit, die Intumeszenzeigenschaften durch das Verhältnis Al:B einstellen zu können.

### Beispiel 5

Durch Umsetzung einer 70 %igen wäßrigen Lösung des Komplexes H₃BO₃. H₂NC₂H₄OH mit einer 70 %igen wäßrigen Lösung von (theor. Formel) (HO)Al(H₂PO₄)₂ im Molverhältnis 4:1 bei 80°C und Eindampfen bei 80°C wurde ein Material mit dem Intumeszenzwert von 3,5 erhalten.

### Beispiel 6

1400 Teile einer 70 %igen wäßrigen Lösung von H₃BO₃.H₂NC₂H₄OH wurden unter Rühren mit 900 Teilen einer 70 %igen wäßrigen Lösung von Al(H₂PO₄)₃ versetzt und 30 Minuten bei 80°C nachgerührt. Man erhielt eine klare Lösung. Diese Lösung wurde als "Lösung 6" in weiteren Beispielen eingesetzt. Das Molverhältnis von Al:B betrug 1:4,1. Das Material hatte nach dem Trocknen bei 80°C bis zur Gewichtskonstanz einen Intumeszenzwert von 6,5, war gut pulverisierbar und konnte bei 80 bis 120°C mit einer Stempelpresse bei 100 bar zu klaren Pillen verpreßt werden.

Bei 160°C ließ es sich auf einem Schneckenextruder zu aufgeschäumten (vorexpandierten) Rundprofilen verarbeiten, die nach Abkühlen ein Raumgewicht von 150 kg/m³ aufwiesen. Daraus hergestellte Granulate konnten in einer Plattenform aus Stahlblech bei 500°C zu 3 cm dicken Platten mit einem Raumgewicht von 100 kg/m³ verschäumt werden. Die erhaltene Platte hatte schaumglasartigen, relativ spröden Charakter und war weitgehend geschlossenporig.

Ganz ähnliche Platten ließen sich auch aus dem entsprechenden, nicht vorexpandierten gepulverten Material herstellen. Sie können als thermisches Isoliermaterial Verwendung finden.

Eine solche Platte wurde 3 Stunden lang auf 1200°C erhitzt. Ohne wesentliche Veränderung des Raumgewichtes erhielt man eine weiße keramikartige Platte aus Aluminium-Bor-Phosphat-Schaumstoff.

### Beispiel 7

a) Handelsüblicher SOₓ-Blähgraphit mit einem Intumeszenzwert von 8 wurde mit Lösung 6 verknetet, so daß der Feststoffanteil der Mischung 30 % des Intumeszenzträgers enthält. Diese Mischung wurde bei 120°C auf ein Glasfaservlies in einer Stärke von 3 mm aufgepreßt, wobei ein flexibles Verbundmaterial entstand. Dieses wurde in Bänder geschnitten, die eine Auflage von 3,2 kg/m² aufwiesen. Ein kreisrunder Ausschnitt dieses Bandes mit einem Durchmesser von 12 mm zeigte im Intumeszenztest einen Intumeszenzwert von 8,5. Derartige Bänder können zur Abdichtung der Spalte bei Feuerschutztüren verwendet werden, wobei die Bänder auch nach dem Trocknen vergleichbare Intumeszenzwerte haben und durch die bei Beflammung eintretende Intumeszenz die Spalte sicher verschließen. Das intumeszierende Material hatte eine gute Bindung und neigte im Heizgasofen nur wenig zum Wegbröseln.
b) 28 g des wie bei a) modifizierten, dann aber bei 120°C getrockneten und granulierten Blähgraphitmaterials wurden in einer Plattenform aus Stahlblech zwischen zwei Lagen aus Papier gleichmäßig verteilt und 30 Minuten auf 600°C gebracht. Nach dem Abkühlen und Entformen erhielt man eine elektrisch leitfähige, duktile Platte, vorwiegend aus expandiertem Blähgraphit bestehend, mit einem Raumgewicht von 96 kg/m³, den Abmessungen 12 x 12 x 2 cm und einer spezifischen Eindruckfestigkeit von durchschnittlich 11,5 kg/cm² (gemessen mittels eines Eindrückzylinders von 5 mm² Druckfläche). Solcherart zugängliche Platten (oder andere Formkörper) eignen sich als Innenlage von Sandwichkonstruktionen für akustische, elektromagnetische und thermische Isolierschichten, zur Umkleidung von Heißgasrohren und zur Füllung von Auspufftöpfen und Heizkörpern.

Eine vergleichbare Platte wurde aus einem entsprechenden Granulat erhalten, das vor dem Einbringen in die Plattenform bei 260°C einem Vorexpansionsprozeß unterzogen und in einer Menge von 27 g in die Form eingefüllt wurde.

### Beispiel 8

Ein Fichtenholzspanmaterial, wie es üblicherwiese zur Spanplattenherstellung verwendet wird und einen Feuchtegehalt von 5,3 % aufwies, wurde mit dem gepulverten Feststoff, der nach Trocknung der Lösung 6 bei 80°C erhalten worden war, vermischt, so daß die Mischung 48 Gew.-% des Intumeszenzträgers enthielt. Diese Mischung wurde auf einer Plattenpresse verpreßt. Die erhaltene Platte hatte ein spezifisches Gewicht von 1050 g/l. Bei Beflammung mit einem Erdgasbrenner brannte die Spanplatte nicht ab, sondern ergab ein expandiertes, lediglich verkohltes, stabiles, flammenabweisendes Flächengebilde.

Solche Spanplatten können zur Herstellung von Kabelschotts und feuerwiderstandfähigen Sandwichplatten für die Herstellung von Türen, Möbeln oder Wandelementen Verwendung finden.

### Beispiel 9

Ein 2 cm breiter, 3 mm dicker und 30 cm langer Fichtenholzspan wurde auf einer Länge von 10 cm allseitig mit Lösung 6 satt eingestrichen und bei 25°C getrocknet. Man erhielt eine nicht klebende, lasierende Beschichtung des Holzes. Nach 30 Tagen Lagerzeit wurde der Span in waagerechter Breitlage in eine Bunsenbrennerflamme eingeführt, so daß die Flamme die Hirnholzkante und 4 cm der Spanlänge umgab. In dieser Stellung wurde der Span 90 Sekunden belassen und dann aus der Flamme gezogen. Die beflammte Stelle des Spanes war von einer ca. 5 mm dicken keramisierten Kruste umgeben, und der Span brannte weniger als 10 Sekunden nach. Das Holzmaterial im Beflammungsbereich war noch mechanisch stabil.

Bei einem gleichartigen Experiment mit einem Span, der in analoger Weise mit der nicht getrockneten Lösung des Vergleichsbeispiels (auf 70 % Feststoffgehalt eingestellt) beschichtet worden war, brannte der Span noch 12 Sekunden nach, war dann nur von einer relativ dünnen Keramisierungsschicht umgeben und mechanisch deutlich weniger stabil.

Die Lösung 6 und vergleichbare erfindungsgemäße Produkte eignen sich also als solche (oder in Kombination mit Hilfsstoffen) ausgezeichnet für Brandschutzbeschichtungen.

### Beispiel 10

In einer Kugelmühle wurde Feststoff, der nach Trocknung der Lösung 6 bei 100°C bis zur Gewichtskonstanz erhalten worden war mit 5 % hydrophober, pyrogener Kieselsäure (Fließhilfsmittel für Feuerlöschpulver) 12 Stunden lang vermahlen. Dann wurde mit dem Pulver ein CO₂-betriebener Trockenfeuerlöscher befüllt, Füllmenge 1 kg. Mit diesem Löschmittel wurde ein Testbrand bekämpft, bei dem ein 2 kg-Gemisch aus gleichen Teilen Magnesium- und Aluminiumspänen entzündet worden war.

Der Brand konnte innerhalb weniger Sekunden gelöscht werden. Die Löschwirkung wurde vor allem dadurch erzielt, daß das Löschpulver das brennende Material mit einer intumeszierenden Schmelze umgab und so einen temperaturbeständigen, oxidationsverhindernden, kühlenden, keramisierenden Schaummantel ausbildete.

### Beispiel 11

In ein handelsübliches, mit Benzoylperoxidpaste aktiviertes Styrol-UP-Harz wurde durch Trocknung bei 90°C aus der Lösung 6 hergestelltes Feststoffpulver eingemischt, so daß es einen Gehalt an erfindungsgemäßem Intumeszenzträger von 40 % aufwies. Diese Mischung wurde in einer Dicke von 3 mm auf ein Glasvlies aufgetragen und daraus in einer Plattenform bei 65°C eine Wellplatte hergestellt. Bei Beflammung mit einem Gasbrenner verkohlte die Platte lediglich im Flammenbereich und brannte nach Entfernung der Flamme weniger als 30 Sekunden nach. Die stabile Struktur der Platte blieb auch nach 90-minütiger Beflammung erhalten.

### Beispiel 12

Ein durch Alkoxylierung von Glycerin mit einem Gemisch aus gleichen Teilen von Ethylenoxid und Propylenoxid hergestellter Polyether mit einer OH-Zahl von 65 wurde in einer Menge von 100 Teilen mit 80 Teilen des in Beispiel 12 verwendeten Intumeszenzpulvers abgemischt und dann mit 20 Teilen eines durch Phosgenierung von Anilin-Formaldehyd-Kondensaten erhältlichen technischen Polyisocyanates (Desmodur® 44 V 10, Bayer AG), 0,8 Teilen Zinnoctoat, 0,3 Teilen eines handelsüblichen Polyether-Polysiloxan-Zellstabilisators und 0,3 Teilen Wasser vermischt. Diese Reaktionsmischung wurde in eine Zylinderform gegeben und bildete dort einen zäh-harten Polyurethanschaum, der ein Raumgewicht von 80 kg/m³ aufwies. Nach Aushärtung bei 80°C wurde aus dem gebildeten Formkörper eine 2 cm dicke Scheibe geschnitten und flächig mit einem Gasbrenner beflammt. Nach 2 Stunden hatte die Scheibe immer noch ihre ursprüngliche äußere Form. Sie war lediglich stark verkohlt, aber nicht durchgebrannt und noch mechanisch stabil.

### Beispiel 13

In eine Plattenform aus Stahlblech, mit den Innenmaßen von 12 x 12 x 2 cm, die mit Aluminiumfolie ausgekleidet war, wurden 40 g des in Beispiel 12 verwendeten Intumeszenzpulvers eingestreut und gleichmäßig auf dem Boden der liegenden Form verteilt. Dann wurde die Form verschlossen und 2 Stunden auf 600°C erhitzt. Nach dem Abkühlen wurde der Form eine feinporig-homogene schaumglasartige Platte entnommen, die ein Raumgewicht von 100 kg/m³ aufwies und spröden, jedoch mechanisch stabilen Charakter hatte und schwarz war. Der Materialverlust von ca. 35 % ist auf das Entweichen von Wasser und Pyrolysegasen aus dem System durch die gasdurchlässige Form zurückzuführen.

Das Ausglühen einer solchen Platte bei 1200°C in Gegenwart von Luft ergab nach Oxidation des enthaltenen Restkohlenstoffs eine farblose, stabile Schaumstoffplatte mit guten thermischen Isoliereigenschaften, die z.B. im Ofenbau Verwendung finden kann.

### Beispiel 14

Es wurde eine 70 %ige Lösung von Al(H₂PO₄)₃ in Wasser hergestellt (Lösung 1) und eine 50 %ige Lösung von H₃BO₃.H₂NC₂H₄OH in Wasser, (Lösung 2).

Dann wurde eine 50 %ige Lösung von Acrylamid in Wasser (Gelbildner) hergestellt (Lösung 3) und eine 25 %ige wäßrige Ammoniumpersulfatlösung (Lösung 4 - Initiator).

Unter N₂-Atmosphäre wurden 600 Teile Lösung 1 mit 1400 Teilen Lösung 2 gemischt. Es entstand eine niedrigviskose klare Lösung in einer leicht exothermen Reaktion. Nach Abkühlung auf 18°C wurden 480 Teile Lösung 3 hinzugerührt (unter N₂) und dann 4 Teile Lösung 4. Man erhielt eine klare Mischung, die bei 60°C in einem Rührgefäß polymerisiert wurde. Man erhielt eine hochviskose, klare und streichfähige Lösung. Die Polymerisation war nach 5 Stunden bei 60°C beendet. Man erhitzte noch 1 Stunde auf 80°C unter Rühren und kühlte dann ab.

Mit der so erhaltenen Beschichtungslösung wurde analog Beispiel 9 eine brandwidrige, lasierende Holzbeschichtung hergestellt und getestet. Die erhaltene Beschichtung zeichnete sich bei gleichen, brandtechnisch vorteilhaften Eigenschaften durch einen besseren Verlauf und eine noch trocknere Oberfläche bei besserer Filmbildung aus.

### Beispiel 15

Ein Gemisch aus 100 Teilen handelsüblichem SOₓ-Blähgraphit und 20 Teilen Holzfasern aus Nadelholzschliff wurde mit 90 Teilen Lösung 6 bei 22°C zu einer Kittmasse verknetet. Aus einer mit dem Kitt gefüllten Kartouche wurde eine 1,5 cm breite und 3 cm tiefe Fuge zwischen zwei Platten aus Schaumbeton ausgefüllt. Die Fugenfüllung trocknete rißfrei und nahezu ohne Schwund und behielt eine gewisse Duktilität bei. Bei Beflammung in einer Kleinbrandkammer in Anlehnung an DIN 4102 hielt die so verschlossene Fuge einen Raumabschluß über mehr als 180 Minuten ohne herauszubrennen.

### Beispiel 16

a) 100 Teile einer 70 %igen wäßrigen Lösung von Al(H₂PO₄)₃ wurden mit 200 Teilen einer 50 %igen wäßrigen Lösung des Umsetzungsproduktes von 1 Mol H₃BO₃ mit 1 Mol Monoethanolamin bei 50°C verrührt. Es bildete sich eine klare Lösung, die bei 80°C getrocknet wurde. Die Trockensubstanz wurde in einer Prallmühle gemahlen und durch Siebung auf durchschnittliche Korndurchmesser zwischen 0,02 und 0,2 mm klassiert.
   80 Teile dieses Pulvers wurden mit 100 Teilen eines Glycerin-gestarteten Polyetherpolyols (aus etwa gleichen Teilen Ethylenoxid und Propylenoxid) mit der OH-Zahl von 251 gut verrührt. Dann wurden zu der Mischung zugesetzt: 1 Teil Zinnoctoat (Aktivator), 0,3 Teile handelsüblicher Zellstabilisator (Polyether-Polysiloxan-Typ) und 0,3 Teile Wasser. Dann wurde diese Vormischung mit 62 Teilen eines handelsüblichen Diphenylmethan-4,4-diisocyanats (Desmodur® 44 V 10, Bayer AG) intensiv vermischt. Nach 1,5 Minuten Mischzeit wurde in eine Becherform gegossen und das Gemisch ohne weiteres Rühren ausreagieren gelassen. Unter Erwärmung und Expansion bildete sich in wenigen Minuten ein nach Abkühlung zähelastischer Schaumstoff mit einem Raumgewicht von 300 kg/m³ und feiner homogener Porenstruktur.
   Aus dem Schaumstoff wurden 3 mm dicke, elastischflexible Platten geschnitten. Auf einer ringförmigen Unterlage aus Gußstahl wurde ein solches Plattenstück aufgelegt und von unten mit einer Bunsenbrennerflamme beflammt. Nach 1 Minute wurde der Brenner entfernt, das Material brannte weniger als 10 Sekunden nach. Dann wurde der Brenner wieder unter das Plattenstück gestellt. Das Material verkohlte, ohne Ruß und Qualmentwicklung, wobei sich eine mineralische Kruste aus intumesziertem Füllstoff bildete, die auch nach 1 h Beflammungsdauer noch nicht durchgebrannt war.
   Aus derartigem Material lassen sich Polsterungen mit brandwidrigem Verhalten herstellen.
b) Verwendete man nicht 62, sondern 80 Teile des Isocyanates sowie 0,8 Teile Wasser bei der Schaumstoffherstellung, so wurde ein flammwidriger Hartschaum erhalten, der bei einem Raumgewicht von 200 kg/m³ flammwidrige und isolierende Eigenschaften besaß. Eine 1,5 cm dicke Platte aus diesem Material hatte noch nach 20 Minuten Beflammung mit einem Bunsenbrenner von der Unterseite her, auf der Oberseite weniger als 100°C Oberflächentemperatur.

### Beispiel 17

Es wurde wie bei Beispiel 16a) gearbeitet, jedoch anstelle des Polyetherpolyols wurde ein Gemisch aus gleichen Teilen eines technischen Polyols der idealisierten Formel (CH₃O)₂POCH₂N(C₂H₄OH)₂ und eines Glycerin-gestarteten verzweigten Adipinsäure-Butylenglykol-Polyesters mit einer OH-Zahl von 80 verwendet.

Man erhielt einen zäh-harten Schaumstoff mit einem Raumgewicht von 350 kg/m³ der sich bei Beflammung analog Beispiel 17 verhielt.

### Beispiel 18

a) 100 Teile des Intumeszenzpulvers aus Beispiel 16a) wurden mit 50 Teilen eines Glycerin-gestarteten Propylenoxid-Polyethers mit der OH-Zahl von 35 und 4,5 Teilen eines Diphenylmethan-4,4-diisocyanates (Desmodur®44 V40, Bayer AG) verknetet. Dann wurde noch 1 Teil Zinnoctoat hinzugeknetet, worauf die Polyurethanbildung einsetzte. Nach 1 Stunde war die Reaktion abgeschlossen, und es hatte sich eine zähdauerelastische Kittmasse gebildet. Diese wurde in eine Kittkartouche eingefüllt und zum Füllen von Fugen verwendet. Bei Beflammung schäumte das Material bei geringer Rauchentwicklung zu einem keramischen Intumeszenzschaum auf, der den Fugenraum gegen den Durchtritt von Hitze und Flammgasen abschirmte.
b) Gemäß a) hergestelltes Kittmaterial wurde mit 5 % Cellulosefasern aus Holzschliff verknetet. Das ergab eine verbesserte Standfestigkeit des Kittes in den Fugen bei analogem Brandwidrigkeitsverhalten.

### Beispiel 19

100 Teile des Pulvers aus Beispiel 16a) wurden bei 120°C 5 Stunden getrocknet. Dann wurde das getrocknete Pulver mit 200 Teilen einer handelsüblichen, Luftfeuchtigkeitstrocknenden Silikon-Fugenmasse verknetet.

Mit der Fugenmasse wurde jeweils eine 1,5 cm breite Fuge zwischen zwei Schaumbetonsteinen 2 cm tief gefüllt.

Nach 30 Tagen wurden die so behandelten Schaumbetonsteine in einen Kleinbrandofen gebracht, der in Anlehnung an DIN 4102 befeuert wurde. Nach 1 Stunde wurde der Brenner gelöscht und nach Abkühlung die von allen Seiten der Brennerflamme ausgesetzt gewesene jeweilige Fuge begutachtet. Die Fuge mit dem nicht modifizierten Material war ausgebrannt, nur noch geringe Reste von SiO₂-Material waren darin verblieben, Die Fuge mit dem das Pulver aus Beispiel 17a) enthaltendem Material war noch verschlossen und mit einer Mischung aus keramisiertem Intumeszenzschaum und SiO₂ gefüllt.

### Beispiel 20

50 Teile des Pulvers aus Beispiel 16a) wurden mit 25 Teilen eines technischen Diphenylmethan-4,4-diisocyanats (Desmodur® 44 V40, Bayer AG) und 0,8 Teilen eines Polycarbodiimidisierungskatalysators auf Basis eines Phospholinoxids verrührt, Die Mischung wurde in eine Becherform gegeben und schäumte dort unter Ausbildung eines Polycarbodiimidschaumes auf. Der gebildete feinzellige Hartschaum hatte ein Raumgewicht von 100 kg/m³. Er erwies sich nach Beflammung mit einem Bunsenbrenner als selbstverlöschend. Eine 1,5 cm dicke Platte aus dem gebildeten Hartschaum war nach einstündiger Beflammung mit einem Erdgasbrenner lediglich verkohlt und teilweise keramisiert.

### Beispiel 21

Ein für die Herstellung von Polystyrolschaumstoffen geeignetes, vorexpandiertes Polystyrol-Perlpolymerisat wurde angefeuchtet und mit der gleichen Gewichtsmenge des Pulvers aus Beispiel 16a) vermischt. Dann wurde in einer zur Verschäumung derartiger Polystyrol-Vorexpandate geeigneten Kastenform das hergestellte Gemisch durch Einblasen von Dampf expandiert. Die eingesetzte Menge des Gemisches wurde so gewählt, daß der Form nach dem Expansionsvorgang ein Schaumstoffquader mit einem Raumgewicht von 100 kg/m³ entnommen werden konnte. Dieser wurde durch Lagern bei 22°C nachgetrocknet, bis er gewichtskonstant war. Aus dem Schaumstoffblock wurde dann eine 1,5 cm dicke Platte geschnitten und mit einem Erdgasbrenner beflammt. Durch Verbrennung von Pyrolysegasen entstand zwar eine gewisse Menge Rauch, aber die beflammte Platte brannte nach Entfernen des Brenners nur weniger als 30 Sekunden nach. An der Flammenfront bildete sich bei längerer Beflammung ein keramischer Intumeszenzschaum. Nach 1 Stunde Beflammung war die Schaumstoffplatte noch nicht durchgebrannt.

### Beispiel 22

Das Intumeszenzpulver aus Beispiel 16a) wurde 24 Stunden in einer Kugelmühle vermahlen. 100 Teile des so erhaltenen Feinmahlgutes wurden mit 100 Teilen eines handelsüblichen aliphatischen Lack-Isocyanates auf Basis von trimerisiertem Hexamethylendiisocyanat (Desmodur® H, Bayer AG) zu einer Pigmentlackmischung angerührt.

Diese Lackmischung wurde mit einem Pinsel auf Sperrholz aufgetragen (Holzdicke 3 mm), Durch Reaktion mit der Luftfeuchte war der Lack nach 24 Stunden ausgehärtet. Der so erhaltene hochglänzende, zähelastische und wasserabweisende Lackfilm wurde mit einer Erdgasbrenner-Flamme beflammt. Unter nur sehr geringer Rauchentwicklung bildet sich an der Flammenfront ein feinporiger, keramisierter Intumeszenzschaum, der das darunterliegende Sperrholz mehr als 30 Minuten gegen Durchbrennen schützte.

Bei einem in gleicher Weise mit dem nicht modifizierten Lack-Isocyanat bestrichenem Sperrholz brannte die Beschichtung bei gleicher Beflammung sofort ab und das Sperrholz in weniger als 10 Minuten durch.

Analoge Ergebnisse wurden erhalten beim Einsatz einer handelsüblichen Alkydharz-Klarlack-Zubereitung zum Anmischen des feinvermahlenen Intumeszenzpulvers.

### Beispiel 23

30 Teile eines üblichen trifunktionellen Polyetherpolyols mit einer OH-Zahl von 35 wurden mit 50 Teilen des gemäß Beispiel 16a) hergestellten Intumeszenzpulvers, 0,3 Teilen eines handelsüblichen Zellstabilisators auf Polyether-Polysiloxan-Basis, 0,5 Teilen Dimethyl-benzylamin, 0,5 Teilen Zinnoctoat, 0,9 Teilen Wasser und 9 Teilen Toluylendiisocyanat intensiv verrührt. Nach 30 Sekunden wurde in eine Becherform gegossen, in der die Mischung zu einem Weichschaum mit Raumgewicht 65 kg/m³ aufschäumte. Aus dem Weichschaum wurde eine 1,5 cm dicke Platte geschnitten, die bei Beflammung mit einem Erdgasbrenner nicht abbrannte, sondern unter geringer Rauchentwicklung verkohlte. Hierbei war bemerkenswert, daß die beflammte Schaumstoffplatte nicht nur nicht abbrannte, sondern auch nicht schrumpfte.

Solche Materialkombinationen sind deshalb gut als flammwidrige Polstermaterialien, z.B. im Fahrzeug-und Flugzeugbau, für die Herstellung von Matrazen, für Abdeckelemente, für die feuerwidrige Ausrüstung von Kabel- und Rohrdurchführungen, für den Schutz von Steuerelementen im Raffineriebau und für Akustik-Absorptionselemente geeignet.

### Beispiel 24

Das analog Beispiel 14 hergestellte Lösungsgemisch der Lösungen 1 bis 4, bei dem jedoch 240 Teile der Lösung 3 und 1 Teil der Lösung 4 eingesetzt wurde, wurde in einem Rührgefäß unter intensivem Rühren bei 45°C 3 Stunden und bei 80°C eine Stunde polymerisiert. Die erhaltene hochviskose Lösung wurde auf einem Walzentrockner bei 80°C im Vakuum getrocknet. Der schuppige Feststoff wurde auf einer Kugelmühle zu einer mittleren Korngröße von unter 0,1 mm vermahlen. Dann wurde analog Beispiel 23 mit dem trifunktionellen Polyetherpolyol ein füllstoffhaltiger Weichschaum hergestellt. Es entstand ein im Raumgewicht und Brandverhalten dem Beispiel 23 entsprechender Schaumstoff. Im Unterschied zu Beispiel 23 war der gebildete Schaumstoff jedoch schneller ausreagiert (d.h. klebfrei) und feinporiger. Er war zu nahezu 100 % offenporig. Im mikroskopischen Bild war keine Phasengrenze innerhalb der organischen Phase zu erkennen aus der die Porenstege aufgebaut waren. Das bedeutet, daß in dem Schaumstoff-Grundpolymer die Partikel des Intumeszenzpulvers homogen eingebaut waren. Bei Beflammung intumeszierte der Schaumstoff und bildete ein keramisches Gerüst ohne zu schrumpfen. Im Mikroskop war erkennbar, daß die Intumeszenz im Bereich zwischen unbeflammten und beflammten Schaumstoff sehr homogen über das gesamte, zunächst wasserklar erscheinende Gerüstmaterial eingesetzt hatte. Es lag also eine gute Verträglichkeit zwischen organischer und anorganischer Materialphase vor. Derartige Schaumstoffe sind zur Herstellung von flammwidrigen Akustikplatten und Absorptionselementen von Interesse.

### Beispiel 25

60 Teile eines Polyetherpolyols, (Propylenoxid gestartet auf Trimethylolpropan) mit einer OH-Zahl von 860, 4 Teile ethoxyliertes Ethylendiamin (OH-Zahl 470) und 40 Teile mit einem Gemisch gleicher Teile Ethylenoxid und Propylenoxid zur OH-Zahl von 42 alkoxyliertes Glycerin wurden mit 0,4 Teilen Wasser und 2 Teilen eines üblichen Zellstabilisators auf Polyether-Polysiloxan-Basis homogen vermischt.

Dann wurden 150 Teile dieses Polyolgemisches mit 240 Teilen des gemäß Beispiel 24 hergestellten Intumeszenzpulvers zu einer fließfähigen Mischung vermischt.

260 Teile dieses Gemisches wurden mit 140 Teilen eines Polyisocyanates (Desmodur® 44 V20, Bayer AG), das 100 Teile des gemäß Beispiel 24 hergestellten Intumeszenzpulvers enthielt, vermischt.

Mit einem Injektionskolben wurden bei 22°C 345 g des so hergestellten Gemisches in eine mit Trennwachs vorbehandelte Stahlform der Innenmaße 32,5 x 24,5 x 1,0 cm hineingedrückt. Die Form war auf 60°C beheizt. Nach 5 Minuten wurde das gebildete Formteil entnommen, eine Platte mit geschlossener, glatter, massiv wirkender Oberfläche und einem schaumstoffartigen Kern, eine Platte mit sogenannter Integralstruktur. Das Raumgewicht der Platte betrug 430 kg/m³. Bei Beflammung mit einer Erdgasflamme erlosch das Material in weniger als 30 Sekunden nach Entfernung der Flamme.

Eine 1,5 cm dicke Platte wurde von der Unterseits her mit einem Bunsenbrenner beflammt. Auch nach 90 Minuten war die Platte noch nicht durchgebrannt.

Derartiges Plattenmaterial oder entsprechende Formkörper sind zur Herstellung flammwidriger Möbel und Behälter geeignet.

## Patentansprüche

1. Intumeszenzträger auf der Basis von Aluminium-Phosphat-Salzen, **dadurch gekennzeichnet, daß** es sich um Umsetzungsprodukte handelt aus
1 Mol einer Aluminiumverbindung mit
2 bis 5 Molen einer Phosphor enthaltenden Säure,
2 bis 9 Molen einer Bor enthaltenden Säure und
2 bis 9 Molen eines Alkanolamins,
die gegebenenfalls bis zu 36 Mol Wasser pro Mol eingesetzter Aluminiumverbindung enthalten.

2. Intumeszenzträger nach Anspruch 1, **dadurch gekennzeichnet, daß** es sich um Umsetzungsprodukte handelt aus
1 Mol Aluminiumhydroxid mit
3 Molen Orthophosphorsäure,
3 bis 7 Molen Orthoborsäure und
3 bis 7 Molen Monoethanolamin.

3. Intumeszenzträger nach Ansprüchen 1 und 2, **dadurch gekennzeichnet, daß** die Umsetzungsprodukte bei bis zu 150°C getrocknet wurden (bei Normaldruck).

4. Verwendung von Intumeszenzträgern nach den Ansprüchen 1 bis 3 zur Herstellung von blähfähigen und geblähten Füllstoffen.

5. Verwendung von Intumeszenzträgern nach Ansprüchen 1 bis 3 in Mischung mit Graphiten, insbesonders blähfähigen Graphiten, zur Herstellung von Beschichtungen und Leichtformkörpern.

6. Verwendung von Intumeszenzträgern nach Ansprüchen 1 bis 3 in Mischung mit Holzspänen und/oder sonstigen spanartigen Materialien zur Herstellung von Formkörpern oder Platten unter Anwendung von Druck und Wärme.

7. Verwendung von Intumeszenzträgern nach Ansprüchen 1 bis 3 als Zusatz zu Elastomeren, Gießharzen, Reaktionsharzen, Preßmassen und Thermoplasten für die Herstellung von Formteilen.

8. Verwendung von Intumeszenzträgern gemäß Ansprüchen 1 bis 3 in Brandschutzanstrichmitteln, Kitten, Mörteln und Beschichtungsmitteln.

9. Verwendung von Intumeszenzträgern nach Ansprüchen 1 bis 3 in Vorrichtungen für den vorbeugenden Brandschutz bei Kabel- und Rohrschotts, Luft- und Transportkanälen, Kabeltrassen, Rohrbrücken, Steuereinrichtungen und Fugen.

## Claims

1. Intumescence carriers based on aluminium phosphate salts, **characterised in that** they are reaction products of
1 mol of an aluminium compound with
2 to 5 mol of a phosphorus-containing acid,
2 to 9 mol of a boron-containing acid and
2 to 9 mol of an alkanolamine,
which optionally contain up to 36 mol of water per mol of aluminium compound employed.

2. Intumescence carriers according to Claim 1, **characterised in that** they are reaction products of 1 mol of aluminium hydroxide with
3 mol of orthophosphoric acid,
3 to 7 mol of orthoboric acid and
3 to 7 mol of monoethanolamine.

3. Intumescence carriers according to Claims 1 and 2, **characterised in that** the reaction products were dried at up to 150°C (under normal pressure).

4. Use of intumescence carriers according to Claims 1 to 3 for the preparation of expandable and expanded fillers.

5. Use of intumescence carriers according to Claims 1 to 3 as a mixture with graphites, in particular expandable graphites, for the production of coatings and lightweight shaped articles.

6. Use of intumescence carriers according to Claims 1 to 3 as a mixture with wood chips and/or other chip-like materials for the production of shaped articles or sheets using pressure and heat.

7. Use of intumescence carriers according to Claims 1 to 3 as an additive to elastomers, casting resins, reactive resins, pressing compositions and thermoplastics for the production of mouldings.

8. Use of intumescence carriers according to Claims 1 to 3 in fire protection paints, putties, mortars and coating agents.

9. Use of intumescence carriers according to Claims 1 to 3 in devices for preventive fire protection in cable and pipe ducts, air and transportation channels, cable routes, pipe bridges, control devices and joints.

## Revendications

1. Supports intumescents à base de sels de phosphate d'aluminium, **caractérisés en ce qu'**il s'agit de produits de la réaction de
1 mole d'un composé d'aluminium avec
de 2 à 5 moles d'un acide contenant du phosphore,
de 2 à 9 moles d'un acide contenant du bore et
de 2 à 9 moles d'une alcanolamine,
qui contiennent éventuellement jusqu'à 36 moles d'eau par mole de composé d'aluminium utilisé.

2. Supports intumescents selon la revendication 1, **caractérisés en ce qu'**il s'agit de produits de la réaction de
1 mole d'hydroxyde d'aluminium avec
3 moles d'acide orthophosphorique,
3 à 7 moles d'acide orthoborique et
3 à 7 moles de monoéthanolamine.

3. Supports intumescents selon les revendications 1 et 2, **caractérisés en ce que** les produits de la réaction sont séchés à des températures atteignant au maximum 150°C (sous pression normale).

4. Utilisation de supports intumescents selon les revendications 1 à 3, pour la préparation de matières de charge expansibles et expansées.

5. Utilisation de supports intumescents selon les revendications 1 à 3 en mélange avec des graphites et, en particulier, des graphites expansibles pour la préparation d'enduits et de pièces de forme légères.

6. Utilisation de supports intumescents selon les revendications 1 à 3, en mélange avec des copeaux de bois et/ou d'autres matériaux en copeaux pour la fabrication de pièces de forme ou de plaques, avec utilisation de la chaleur et de la pression.

7. Utilisation de supports intumescents selon les revendications 1 à 3, comme additifs aux élastomères, aux résines moulées, aux résines réactives, aux masses comprimées et aux thermoplastiques, pour la fabrication de pièces de forme.

8. Utilisation de supports intumescents selon les revendications 1 à 3 dans les peintures, les mastics, les mortiers et les enduits ignifuges.

9. Utilisation de supports intumescents selon les revendications 1 à 3 dans des dispositifs pour la protection préventive contre l'incendie dans les cloisons pour câbles et tuyaux, les gaines pour l'air et le transport, les chemins de câbles, Des passerelles à tuyauteries, les dispositifs de commande et les joints.
